# FASCICULE DE BREVET EUROPEEN

(11) **EP 4 017 743 B1**
(45) Date de publication et mention de la délivrance du brevet: **12.11.2025**
(21) Numéro de dépôt: 20754791.0
(22) Date de dépôt: 29.07.2020
(51) Int. Cl.: B60H 1/00, F16H 19/04

(54) **DISPOSITIF DE COMMANDE D'UN VOLET**
VORRICHTUNG ZUR STEUERUNG EINER BLENDE
DEVICE FOR CONTROLLING A SHUTTER

(30) Priorité: 21.08.2019 FR 1909312
(43) Date de publication de la demande: 29.06.2022
(73) Titulaire: VALEO SYSTEMES THERMIQUES, 78320 Le Mesnil Saint-Denis (FR)
(72) Inventeur: DUBOIS, Christian, 78320 LE MESNIL SAINT-DENIS (FR)
(74) Mandataire: Valeo Powertrain Systems
(86) Numéro de dépôt international: PCT/FR2020/051402
(87) Numéro de publication internationale: WO 2021/032917

(56) Documents cités:
- FR-A1- 2 664 860
- FR-A1- 2 766 760

## Description

La présente divulgation concerne un dispositif de commande d'un volet, pour un système de chauffage, ventilation et/ou climatisation de véhicule automobile..

Il est connu qu'un tel système de chauffage, ventilation et/ou climatisation de véhicule automobile comprend une multitude de volets dont il faut commander le mouvement, qu'il s'agisse de volets d'entrée d'air, de mixage ou encore de distribution.

Pour ce faire, on prévoit en général des dispositifs de transmission comprenant une crémaillère de la forme d'une barre munie de dents et qui coopère avec un pignon, de sorte qu'une rotation du pignon entrainé par la crémaillère commande le pivotement d'un volet associé. Il faut alors prévoir un ensemble, par exemple vis et rondelle, pour retenir axialement le pignon contre la crémaillère, ce qui complexifie le procédé de fabrication du système de chauffage, ventilation et/ou climatisation du véhicule automobile et en augmente le coût.

La présente invention vient améliorer la situation. FR 2 664 860 A1 divulgue un dispositif de commande d'une unité de chauffage ou de climatisation de véhicule transforme le mouvement continu d'un volet de distribution d'air en une rotation discontinue et/ou réversible. Le dispositif comprend des supports fixes et une unité de chariot qui présente un mouvement coulissant continu sur les supports dans une seule direction. Un pignon tourne autour d'un axe vertical pour assurer le mouvement de coulissement du chariot, et est relié au volet de distribution de telle sorte que le chariot roule sur au moins une crémaillère. Le pignon est reporté sur une partie de la course du chariot, avec une butée maintenant le pignon sur une autre partie de la course où la crémaillère n'est pas reliée.

A cet effet, il est proposé un dispositif de commande selon la revendication 1.

Ainsi, grâce à la présente invention, la retenue axiale permet d'éviter de recourir à toute pièce supplémentaire, ce qui simplifie le procédé de fabrication et en réduit le coût.

Selon un autre aspect, le moyen de retenue axiale et la crémaillère sont portés par des côtés opposés de ladite circonférence intérieure.

Selon un autre aspect, un deuxième diamètre de la roue dentée est supérieur au deuxième diamètre du trou oblong.

Il est également proposé un système de chauffage, ventilation et/ou climatisation de véhicule automobile, comprenant au moins un volet et un dispositif de commande tel que décrit précédemment pour commander le mouvement dudit volet.

D'autres caractéristiques, détails et avantages apparaîtront à la lecture de la description détaillée ci-après, et à l'analyse des dessins annexés, sur lesquels :
**Fig. 1**

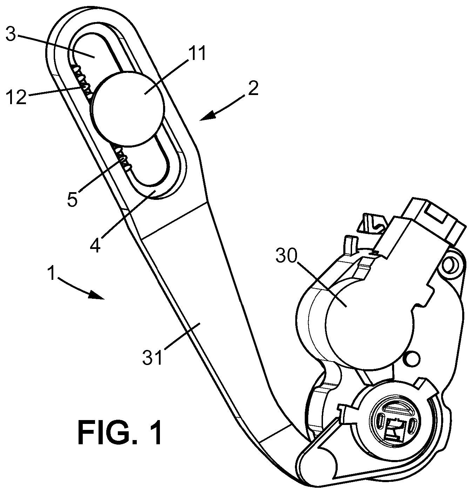

   [Fig. 1] illustre une vue en perspective d'un dispositif de commande selon la présente invention.
**Fig. 2**

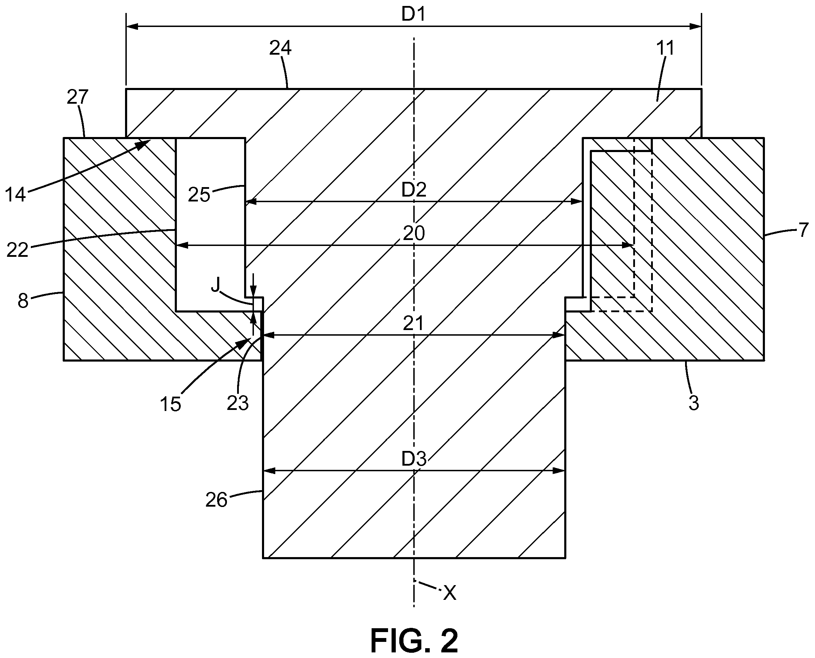

   [Fig. 2] illustre une section transversale d'un détail du dispositif de commande de la figure 1.
**Fig. 3**

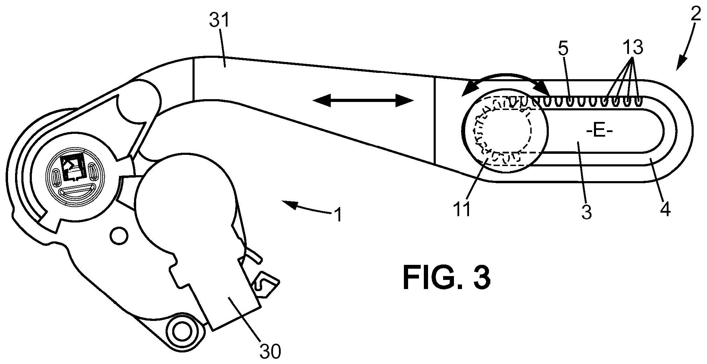

   [Fig. 3] illustre le dispositif de commande de la figure 1 dans une première position extrémale.
**Fig. 4**

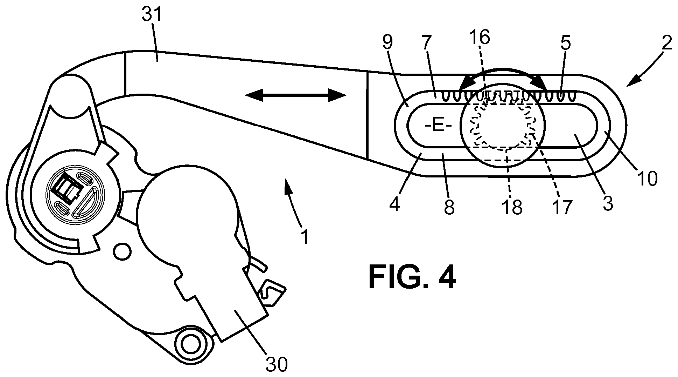

   [Fig. 4] illustre le dispositif de commande de la figure 1 dans une deuxième position extrémale.
**Fig. 5**

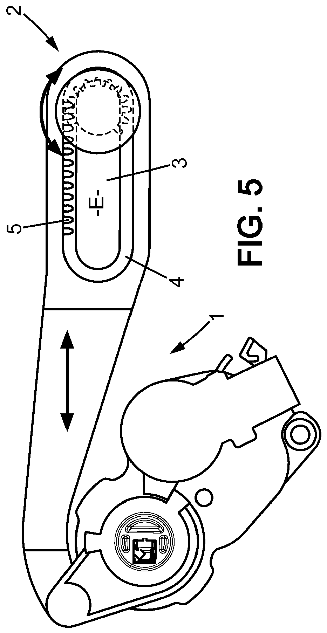

   [Fig. 5] illustre le dispositif de commande de la figure 1 dans une position intermédiaire.

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Comme illustré sur les figures, l'invention a pour objet un dispositif de commande d'un élément, tel qu'un volet, pour un système de chauffage, ventilation et/ou climatisation de véhicule automobile. Le dispositif de commande est référencé 1 sur les figures. Il est illustré ici dans son application à la commande du pivotement d'un volet du système de chauffage, ventilation et/ou climatisation. Il s'agit notamment d'un volet d'entrée d'air, de mixage ou de distribution.

L'invention a également pour objet un dispositif 2 de transmission de mouvement qui peut notamment être mis en œuvre par le dispositif de commande 1.

Nous allons décrire tout d'abord le dispositif de transmission de mouvement 2.

Comme visible sur les figures, le dispositif de transmission 2 comprend un bras 31, ou une bielle, comprenant un orifice 3 muni à sa circonférence 4 d'une crémaillère 5. On peut aussi dire que le bras 31 comprend un orifice 3 dans sa structure de manière à définir une couronne dont la circonférence 4 intérieure ou interne comporte au moins partiellement une crémaillère 5 et un moyen de retenue axiale 14. Autrement dit, le bras 31 et l'orifice 3 définissent une couronne, ici de forme oblongue, avec la crémaillère 5 étant agencée au moins partiellement sur la circonférence 4 intérieure ou interne de la couronne. En d'autres termes, l'extrémité du bras 31 et l'orifice 3 définissent un tore, ou un anneau, de forme allongée avec la crémaillère étant agencée sur la circonférence 4 interne du tore.

Sur le mode de réalisation illustré, l'orifice 3 est un trou oblong débouchant. Néanmoins, l'invention n'est pas limitée à cette configuration.

Comme il ressort des figures, le trou oblong 3 présente deux côtés droits opposés 7, 8 disposés entre deux extrémités arrondies 9, 10. Un espace E délimité par les côtés 7, 8 et les extrémités 9, 10, est conformé pour recevoir une roue dentée 11, comme il sera détaillé ultérieurement.

La crémaillère 5 correspond à une partie 12 de ladite circonférence 4 munie d'une pluralité de dents 13 conformées pour coopérer avec la roue dentée 11. Autrement dit, la crémaillère 5 ne s'étend pas sur l'intégralité de ladite circonférence 4.

Sur les figures, la crémaillère 5 est disposée d'un des côtés 7 du trou oblong 3.

La circonférence 4 intérieure de la couronne, autrement dit du trou oblong 3, est également munie d'un moyen de retenue axiale 14 de la crémaillère 5, ainsi que d'un moyen de guidage radial 15 de la crémaillère 5, qui seront décrits l'un et l'autre en relation avec la figure 2.

Comme illustré sur les figures, la roue dentée 11 comprend un secteur 16 muni de dents 17 ainsi qu'un secteur dépourvu de dents, appelé secteur lisse 18. Les dents 17 sont conformées pour coopérer avec les dents 13 de la crémaillère 5, de sorte que les dents 17 engrènent ou soient engrenées par les dents 13.

Le dispositif de transmission 2 est maintenant décrit en référence à la figure 2.

Comme il ressort de cette figure, le trou oblong 3 délimite un premier diamètre 20 et un deuxième diamètre 21.

Le premier diamètre 20 correspond à la distance entre les côtés opposés 7, 8, sur une première partie de hauteur de section, 22. Le deuxième diamètre 21 correspond à la distance entre les côtés opposés 7, 8, sur une deuxième partie de hauteur de section, 23. Sur la figure 2, le premier diamètre 20 est supérieur au deuxième diamètre 21. Autrement dit, la section de chaque côté 7, 8, présente une forme générale en L.

Le premier diamètre 20 forme le moyen de retenue axiale 14. Le deuxième diamètre 20 forme le moyen de guidage radial 15.

Comme également illustré sur la figure 2, la roue dentée 11 présente une symétrie de révolution autour d'un axe X passant par un milieu des premier et deuxième diamètres 20, 21.

La roue dentée 11 comprend une portion supérieure 24 de diamètre D1, une portion intermédiaire 25 de diamètre D2 et une portion inférieure 26 de diamètre D3, la portion intermédiaire 25 étant disposée entre les portions 24 et 26. On note que le diamètre D1 est supérieur au diamètre D2 lui-même supérieur au diamètre D3.

La portion supérieure 24 de la roue dentée 11 repose sur un sommet 27 de la première partie de hauteur de section 22 du côté 8, le diamètre D1 étant supérieur au premier diamètre 20, ce qui permet la retenue axiale de la crémaillère 5.

Le diamètre D3 est sensiblement identique au diamètre 21, ce qui permet le guidage radial de la crémaillère 5.

On note qu'il existe un jeu J entre la portion intermédiaire 25 et la partie 23, ce qui nécessite le découplage des fonctions de retenue axiale et de guidage radial.

Selon une variante non illustré, on supprime le jeu J. Dans ce cas, du fait du décroché entre les portions 25 et 26, la partie de hauteur de section 23 permet d'assurer les fonctions de retenue axiale et de guidage, le diamètre 21 étant inférieur au diamètre D2. En d'autres termes, selon cette variante, le moyen de retenue axiale 14 et le moyen de guidage radial 15 sont constitués par le diamètre 21.

En référence maintenant aux figures 1 et 3 à 5, le dispositif de commande 1 comprend le dispositif de transmission de mouvement 2 déjà décrit.

Le dispositif de commande 1 comprend un actionneur 30 et un bras 31 entrainé par l'actionneur 30.

Le bras 31 porte le trou oblong 3 muni des moyens de retenue axiale 14 et de guidage 15 détaillés en relation avec la figure 2.

La roue dentée 11 est logée dans le trou oblong 3, comme déjà décrit. La roue 11 est solidaire d'un axe (non illustré) lui-même solidaire directement ou indirectement d'un volet.

Comme illustré sur les figures 3 à 5, en fonctionnement, l'actionneur 30 entraine un mouvement de translation de la crémaillère 5 du bras 31 entre les deux positions extrémales 10, 11. La crémaillère 5 engrène alors la roue dentée 11, provoquant une rotation de la roue dentée 11, ce qui entraîne directement ou indirectement le pivotement du volet.

Ainsi, grâce à la présente invention, il est possible de réduire le nombre de pièces nécessaires, puisque le positionnement de la roue dentée dans le trou oblong suffit pour maintenir la crémaillère, sans qu'il soit nécessaire de recourir à une vis et une rondelle. Il en résulte que le procédé de fabrication du système de chauffage, ventilation et/ou climatisation équipé du dispositif de commande 1 est simplifié et de coût réduit.

## Revendications

1. Dispositif de commande d'un élément, tel qu'un volet, pour un système de chauffage, ventilation et/ou climatisation de véhicule automobile, comprenant :
- un bras (31) comprenant un orifice (3) de manière à définir une couronne dont la circonférence (4) intérieure comporte au moins partiellement une crémaillère (5) et un moyen de retenue axiale (14),
- une roue dentée (11) destinée pour être solidaire d'un axe et conformée pour coopérer avec le moyen de retenue axiale (14) et la crémaillère (5) de sorte à entrainer le mouvement dudit élément, ladite circonférence (4) étant munie d'un moyen de guidage radial (15), l'orifice (3) étant un trou oblong, le moyen de retenue axiale (14) étant constitué par un premier diamètre (20) du trou oblong (3) et le moyen de guidage radial (15) étant constitué par un deuxième diamètre (21) du trou oblong (3), distinct du premier diamètre (20),
**caractérisé en ce qu'** un premier diamètre (D1) de la roue dentée (11) est supérieur au premier diamètre (20) du trou oblong (3).

2. Dispositif selon la revendication 1, dans lequel le moyen de retenue axiale (14) et la crémaillère (5) sont portés par des côtés opposés (7, 8) de ladite circonférence (4).

3. Dispositif selon la revendication 1 ou 2, dans lequel un deuxième diamètre (D3) de la roue dentée (11) est supérieur au deuxième diamètre (21) du trou oblong (3).

4. Système de chauffage, ventilation et/ou climatisation de véhicule automobile, comprenant au moins un volet et un dispositif de commande (1) selon l'une des revendications précédentes pour commander le mouvement dudit volet

## Patentansprüche

1. Steuervorrichtung für ein Element, wie beispielsweise eine Klappe, für eine Heizungs-, Lüftungs- und/oder Klimaanlage eines Kraftfahrzeugs, umfassend:
• einen Arm (31), der eine Öffnung (3) aufweist, um einen Ring zu definieren, dessen innerer Umfang (4) mindestens teilweise eine Zahnstange (5) und ein axiales Haltemittel (14) aufweist,
• ein Zahnrad (11), das dazu bestimmt ist, mit einer Achse fest verbunden zu sein, und das so ausgebildet ist, dass es mit dem axialen Haltemittel (14) und der Zahnstange (5) zusammenwirkt, um die Bewegung des Elements anzutreiben, wobei der Umfang (4) mit einem radialen Führungsmittel (15) versehen ist, die Öffnung (3) ein Langloch ist, das axiale Haltemittel (14) durch einen ersten Durchmesser (20) des Langlochs (3) gebildet wird und das radiale Führungsmittel (15) durch einen zweiten Durchmesser (21) des Langlochs (3) gebildet wird, der sich vom ersten Durchmesser (20) unterscheidet,
• **dadurch gekennzeichnet, dass** ein erster Durchmesser (D1) des Zahnrads (11) größer ist als der erste Durchmesser (20) des Langlochs (3).

2. Vorrichtung nach Anspruch 1, wobei das axiale Haltemittel (14) und die Zahnstange (5) von gegenüberliegenden Seiten (7, 8) des Umfangs (4) getragen werden.

3. Vorrichtung nach Anspruch 1 oder 2, wobei ein zweiter Durchmesser (D3) des Zahnrads (11) größer ist als der zweite Durchmesser (21) des Langlochs (3).

4. Heizungs-, Lüftungs- und/oder Klimaanlage für ein Kraftfahrzeug, umfassend mindestens eine Klappe und eine Steuervorrichtung (1) nach einem der vorhergehenden Ansprüche zur Steuerung der Bewegung der Klappe.

## Claims

1. A control device for an element, such as a flap, for a heating, ventilation and/or air conditioning system of a motor vehicle, comprising:
• an arm (31) comprising an orifice (3) so as to define a crown wheel whose inner circumference (4) at least partially comprises a rack (5) and an axial retention means (14),
• a gear wheel (11) intended to be integral with an axle and configured to cooperate with the axial retention means (14) and the rack (5) so as to drive the movement of said element,
• said circumference (4) being provided with a radial guide means (15) , the orifice (3) being an oblong hole , the axial retention means (14) being constituted by a first diameter (20) of the oblong hole (3) and the radial guide means (15) being constituted by a second diameter (21) of the oblong hole (3), distinct from the first diameter (20),
• **characterized in that** a first diameter (D1) of the gear wheel (11) is greater than the first diameter (20) of the oblong hole (3).

2. The device according to claim 1, wherein the axial retention means (14) and the rack (5) are carried by opposite sides (7, 8) of said circumference (4).

3. The device according to claim 1 or 2, wherein a second diameter (D3) of the gear wheel (11) is greater than the second diameter (21) of the oblong hole (3).

4. A heating, ventilation and/or air conditioning system for a motor vehicle, comprising at least one flap and a control device (1) according to any one of the preceding claims for controlling the movement of said flap.
